(19) Europäisches Patentamt / European Patent Office / Office européen des brevets

(11) **EP 4 503 168 A1**

(12) **EUROPEAN PATENT APPLICATION**
published in accordance with Art. 153(4) EPC

(43) Date of publication:
**05.02.2025 Bulletin 2025/06**

(21) Application number: **23857692.0**

(22) Date of filing: **22.08.2023**

(51) International Patent Classification (IPC):
**H01M 4/13** (2010.01)    **H01M 4/62** (2006.01)
**H01M 4/139** (2010.01)    **H01M 4/02** (2006.01)

(52) Cooperative Patent Classification (CPC):
**H01M 4/02; H01M 4/13; H01M 4/139; H01M 4/62;**
**Y02E 60/10**

(86) International application number:
**PCT/KR2023/012396**

(87) International publication number:
**WO 2024/043660 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **22.08.2022  KR 20220105065**
            **21.08.2023  KR 20230109223**

(71) Applicant: **LG Chem, Ltd.**
**Yeongdeungpo-gu**
**Seoul 07336 (KR)**

(72) Inventors:
• **SEO, Jung Hyun**
  **Daejeon 34122 (KR)**
• **KO, Kyung Moon**
  **Daejeon 34122 (KR)**
• **LEE, Seungho**
  **Daejeon 34122 (KR)**
• **KIM, Yu Jin**
  **Daejeon 34122 (KR)**
• **JUNG, Soonhwa**
  **Daejeon 34122 (KR)**

(74) Representative: **Hoffmann Eitle**
**Patent- und Rechtsanwälte PartmbB**
**Arabellastraße 30**
**81925 München (DE)**

(54) **ELECTRODE FOR LITHIUM SECONDARY BATTERY, AND LITHIUM SECONDARY BATTERY**

(57)    An electrode for a lithium rechargeable battery includes an electrode substrate and a porous layer. The porous layer includes a binder resin and inorganic fine particles. The porous layer is present on the electrode substrate. The binder resin includes a (co)polymer containing a repeating unit derived from a urethane (meth) acrylate-based monomer or oligomer. A lithium rechargeable battery comprising the same is also provided.

【FIG. 1】

Cylindrical mandrel
Negative single-sided electrode
Copper (Cu) current collector surface

Porous layer
Electrode layer
Copper Current Collector

EP 4 503 168 A1

**Description**

CROSS-REFERENCE TO RELATED APPLICATION(S)

This application is a national phase entry under 35 U.S.C. § 371 of International Application No. PCT/KR2023/012396 filed on August 22, 2023, which claims priority to Korean Patent Application No. 10-2022-0105065, filed on August 22, 2022 and Korean Patent Application No. 10-2023-0109223, filed on August 21, 2023, in the Korean Intellectual Property Office, the disclosures of which are incorporated herein by reference in their entirety.

TECHNICAL FIELD

The present disclosure relates to an electrode for a lithium rechargeable battery that not only has high high-temperature stability, strong structural stability, and high interface adhesive strength with a counter electrode, but also can improve the life characteristics, charge capacity, and discharge capacity of the lithium rechargeable battery, and has high bending resistance, and a lithium rechargeable battery comprising the same.

**[BACKGROUND ART]**

Recently, with the development of technology and demand for mobile devices, the demand for rechargeable batteries as energy sources is rapidly increasing, and accordingly, a lot of research on rechargeable batteries capable of meeting various demands has been conducted. In addition, the rechargeable battery has attracted considerable attention as a power source for electric vehicles (EV), hybrid electric vehicles (HEV) and plug-in hybrid electric vehicles (Plug-in HEV), which have been developed to solve problems, such as air pollution, caused by existing gasoline and diesel vehicles using fossil fuels.

The lithium rechargeable battery generates extreme heat and cause explosion when a short circuit occurs due to contact between a positive electrode and a negative electrode. The porous separator of the rechargeable battery exhibits extreme heat shrinkage behavior at temperatures of about 100°C or more due to material characteristics and manufacturing process characteristics including stretching, which pose a problem of causing a short circuit between the positive electrode and the negative electrode.

Accordingly, various studies are being conducted on methods that can ensure the shape stability and high-temperature stability of lithium rechargeable batteries.

**[Technical Problem]**

It is an object of the present disclosure to provide an electrode for a lithium rechargeable battery that not only has high high-temperature stability, strong structural stability, and high interface adhesive strength with a counter electrode, but also can improve the life characteristics, charge capacity, and discharge capacity of the lithium rechargeable battery, and has high bending resistance.

It is another object of the present disclosure to provide a lithium rechargeable battery comprising the electrode for a lithium rechargeable battery.

**[Technical Solution]**

Provided herein is an electrode for a lithium rechargeable battery comprising: an electrode substrate, and a porous layer which includes a binder resin formed on the electrode substrate, including a (co)polymer containing a repeating unit derived from a urethane (meth)acrylate-based monomer or oligomer, and inorganic fine particles.

Also provided herein is a lithium rechargeable battery comprising the electrode for a lithium rechargeable battery.

**[Advantageous Effects]**

There can be provided an electrode for a lithium rechargeable battery that not only has high high-temperature stability, strong structural stability, and high interface adhesive strength with a counter electrode, but also can improve the life characteristics, charge capacity, and discharge capacity of the lithium rechargeable battery, and has high bending resistance, and a lithium rechargeable battery comprising the same.

**[BRIEF DESCRIPTION OF THE DRAWINGS]**

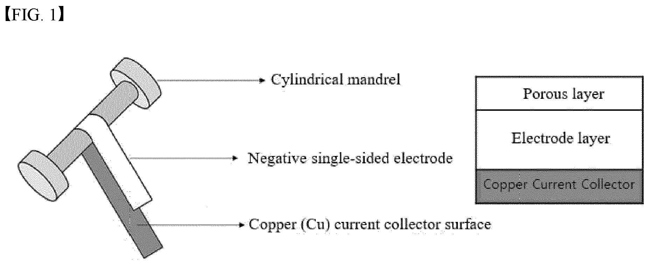

FIG. 1 is a diagram illustrating a method for measuring bending resistance in Experimental Example 1.

**[DETAILED DESCRIPTION]**

Now, an electrode for a lithium rechargeable battery, a lithium rechargeable battery, and the like according to embodiments of the disclosure will be described in more detail.

The photopolymerizable compound as used herein collectively refers to a compound that causes a polymerization reaction when irradiated with a light, for example when irradiated with visible light or ultraviolet light.

Further, the (meth)acryl is meant to include both acryl and methacryl.

Further, the (co)polymer is meant to include both co-polymer and homo-polymer.

Further, the electrode substrate means a current collector.

Further, the electrode means that an electrode layer is coated onto an electrode substrate, and the electrode layers coated on a single side or double sides are called a single-sided electrode and a double-sided electrode, respectively.

According to one embodiment of the disclosure, there is provided an electrode for a lithium rechargeable battery comprising: an electrode substrate, and a porous layer which includes a binder resin formed on the electrode substrate, including a (co)polymer containing a repeating unit derived from a urethane (meth)acrylate-based monomer or oligomer, and inorganic fine particles.

The present inventors have developed an electrode for a lithium rechargeable battery comprising the porous layer, and confirmed through experiments that such an electrode for a lithium rechargeable battery not only has high high-temperature stability, strong structural stability, and high interface adhesive strength with a counter electrode, but also can improve the life characteristics, charge capacity, and discharge capacity of the lithium rechargeable battery, thereby completing the invention.

In particular, in the porous layer, inorganic fine particles may be connected, coupled, or fixed through the binder resin described above. As the binder resin includes a (co)polymer containing a repeating unit derived from a urethane (meth)acrylate-based monomer or oligomer, it is possible to have flexibility or bending resistance that is difficult to achieve in a rechargeable battery comprising a commonly known electrode coating layer or a separator having a coating layer formed thereon.

Specifically, the porous layer or an electrode for a lithium rechargeable battery including the porous layer can have bending resistance that does not cause cracks when wound around a cylindrical mandrel with a diameter of 2 mm or more according to the ISO1519:2011 standard method.

The porous layer or the electrode for a lithium rechargeable battery including the porous layer is subjected to a cylindrical mandrel test from a large diameter to a small diameter according to the ISO 1519:2011 standard method to determine bending resistance. The measurement sample may be an electrode for a lithium rechargeable battery including a porous layer, and the electrode may be a single-sided electrode or a double-sided electrode. In the case of a single-sided electrode, the porous layer is formed on the opposite surface of the current collector while being in contact with the electrode layer, and in the case of a double-sided electrode, the porous layer is formed on the opposite surface of the current collector while being in contact with only one-sided electrode layer.

In a state in which the porous layer is formed on the electrode substrate, the above-mentioned bending resistance can be evaluated in a state in which the porous layer is in close contact with a cylindrical mandrel so that it faces outward which does not contact therewith.

The bending resistance value can be determined by the diameter of the largest first mandrel at which a crack occurs in the coating layer when the electrode coated with the porous layer is brought into close contact with a cylindrical mandrel, or the coating layer is separated from the electrode layer, or the coating layer and the electrode layer are separated together from the current collector. When such a method is applied, the porous layer or an electrode for a lithium rechargeable battery including the porous layer may have bending resistance that does not cause cracks, when wound around a cylindrical mandrel with a diameter of 2 mm or more, 3 mm or more, or 4 mm or more, 2 mm to 40 mm, 3 mm to 30 mm, or 4 mm to 20 mm according to the ISO1519:2011 standard method.

Meanwhile, conventional lithium rechargeable batteries had a problem that the polymer separator disposed between the positive electrode and the negative electrode has weak interface adhesion strength with a counter electrode, thereby reducing the efficiency of the battery assembly process, and that as the electrode expands and shrinks, interfacial peeling occurs due to lack of adhesion strength, thereby reducing battery life characteristics. In particular, there was a problem that it exhibits extreme thermal shrinkage behavior at temperatures of 100°C or higher, which causes a short circuit between the positive electrode and the negative electrode.

On the contrary, the electrode for a lithium rechargeable battery of the above embodiment may have high interface adhesion strength with a counter electrode and a strong internal structure, while the porous layer formed on the electrode substrate replaces the function of the existing polymer separator. The electrode can prevent deterioration of structural stability and deterioration of battery performance even at temperatures of 100°C or more.

More specifically, a binder resin including a (co)polymer containing a repeating unit derived from a urethane (meth)acrylate-based monomer or oligomer contains a flexible functional group inside that can absorb external impact, and it binds with adjacent binder resins through a photopolymerization reaction to form a crosslinked structure, and thereby can play a role in fixing the position of alumina particles distributed between binder resins.

The inorganic fine particles are the main components that form the porous layer, and serve to form fine pores by existing empty spaces between the inorganic fine particles, and also serve as a kind of spacer that can maintain the physical shape of the porous layer.

Further, the crosslinked structure of the porous layer has higher thermal stability and higher dimensional stability than existing polyolefin separators, thereby making it possible to improve the life characteristics, charge capacity, and discharge capacity of lithium rechargeable batteries.

The porous layer can form pores of a micro unit by adjusting the size of the inorganic fine particles, the content of the inorganic fine particles, and the content of the binder resin, and can also adjust the pore size and the porosity degree, and for example, the porosity of the porous layer may be 40% to 80%, 45% to 75%, or 50% to 70%.

The porosity of the porous layer can be realized in accordance with the composition of the porous layer. The porosity of the porous layer can be realized as the porous layer satisfies the above-mentioned contents of the inorganic fine particles and the binder resin. As the porous layer has a porosity within the above-mentioned range, a technical effect of improving battery performance can be realized due to an electrochemical cause that allows smooth movement of electrolyte lithium ions through a pore.

If the porosity of the porous layer is less than 40%, the movement of lithium ions is restricted and resistance increases, which may cause technical problems that the charge and discharge characteristics of the battery are deteriorated. If the porosity of the porous layer is more than 80%, the mechanical properties of the porous layer may be weakened, which may cause technical problems that the durability of the battery device is deteriorated.

The porosity can be calculated according to the following Mathematical Equation 1 by using the ratio between the density obtained by measuring the volume and mass of the porous layer for a sample coated with the above composition on an electrode substrate of a fixed area and the theoretical density of the solid content of the coating composition.

[Mathematical Equation 1]

$$\text{Porosity (\%)} = \{1\text{-}(\text{Actual density})/(\text{Theoretical density})\} \times 100.$$

.

By adjusting the size of the inorganic fine particles, the content of the inorganic fine particles, and the content of the binder resin, the size of the pores formed in the porous layer can be adjusted. Specifically, the porous layer may be formed with fine pores having a cross-sectional diameter of 20 to 2000 nm, 30 to 1000 nm, 100 to 1000 nm, or 100 to 500 nm.

In particular, as inorganic fine particles contain in the porous layer, fine pores having a cross-sectional diameter within the above-mentioned range can be formed, whereby the electrode for a lithium rechargeable battery that not only has high high-temperature stability, strong structural stability, and high interface adhesive strength with a counter electrode, but also can improve the life characteristics, charge capacity, and discharge capacity of the lithium rechargeable battery.

Meanwhile, the porous layer may contain 1 to 50 parts by weight, or 3 to 45 parts by weight, or 5 to 40 parts by weight, or 20 to 38 parts by weight of the binder resin relative to 100 parts by weight of the inorganic fine particles. As mentioned above, the porous layer can form pores of a micro unit by adjusting the size of the inorganic fine particles, the content of the inorganic fine particles, and the content of the binder resin, and can also adjust the pore size and the porosity degree.

That is, as the porous layer contains 1 to 50 parts by weight, or 3 to 45 parts by weight, or 5 to 40 parts by weight, or 20 to 38 parts by weight of the binder resin relative to 100 parts by weight of the inorganic fine particles, the porosity of the porous layer may be 40% to 80%, 45% to 75%, and 50% to 70%, and the porous layer may be formed with fine pores having a cross-sectional diameter of 20 to 2000 nm, 30 to 1000 nm, or 30 to 500 nm.

Further, as the porous layer contains 1 to 50 parts by weight, or 3 to 45 parts by weight, or 5 to 40 parts by weight, or 20 to 38 parts by weight of the binder resin relative to 100 parts by weight of the inorganic fine particles, the effect of maintaining stable adhesion of the porous layer to the electrode substrate can be realized without impeding ionic conductivity.

When the porous layer contains an excessive amount or a too small amount of binder resin relative to the inorganic fine particles, the pore size and the porosity degree are reduced due to a decrease in the empty space formed between the inorganic fine particles, which leads to a deterioration in the final battery performance, or the adhesive strength between the inorganic fine particles is weakened and the peel resistance is weakened, which leads to a deterioration in the mechanical properties of the porous layer.

The inorganic fine particles may have a diameter of each particle in a nanometer unit or a micrometer unit, and may include, for example, inorganic fine particles in which the diameter of each particle is in the range of 1 nm to 500 $\mu$m. In addition, the inorganic fine particles can form one particle (secondary particle) by agglomerating each particle (primary particle), and the formed secondary particle can behave like one independent particle.

More specifically, the inorganic fine particles may include boehmite including primary particles having an average particle diameter of 10 nm to 500 nm, 20 nm to 400 nm, and 30 nm to 300 nm.

The average particle diameter can be measured using commonly known methods and devices. For example, a method can be used in which a scanning electron microscope (SEM) photograph is taken at 50,000x magnification using Jeol JSM-7400F, and then the diameter is calculated using an image analysis program (Image Pro Plus ver 4.5).

Meanwhile, the inorganic fine particles may include secondary particles having a D50 of 10 nm to 2000 nm, 20 nm to 1000 nm, and 50 nm to 800 nm.

Further, the inorganic fine particles may include boehmite including primary particles having an average particle diameter of 10 nm to 500 nm, 20 nm to 400 nm, and 30 nm to 300 nm, wherein the boehmite may include secondary particles having a D50 of 10 nm to 2000 nm, 20 nm to 1000 nm, and 50 nm to 800 nm.

The $D_{50}$ means the particle diameter of particles corresponding to a rank of 50% of the total number of particles when the measured particles are arranged in order from a small particle diameter to a large particle diameter. The D50 can be measured using commonly known methods and devices. For example, the D50 can be measured using PSA (Particle diameter analyzer) or DLS (Dynamic light scattering). For example, for the D50 measurement using PSA, the particle diameter distribution of a solution in which particles are dispersed can be measured using Malvern Mastersizer 3000, and for the D50 measurement using DLS, the particle diameter distribution of a solution in which particles are dispersed can be measured using ELSZ-2000 DLS (Otsuka Electronics).

If the diameter of the inorganic fine particles is too small, the dispersibility is reduced, which makes it difficult to adjust the physical properties of the porous layer, and if the diameter of the inorganic fine particles is too large, the thickness of the porous layer may increase and the mechanical properties may deteriorate, and due to excessively large pore size, the probability of occurrence of internal short circuit when charging and discharging the battery becomes higher.

The inorganic fine particles are not particularly limited if they are electrically and chemically stable. Specifically, the inorganic fine particles are not particularly limited if oxidation or reduction reaction does not occur in an operating voltage range of an applied battery. In particular, in case an inorganic fine particle with ion transferring capability is used, it is possible to enhance the performance by increasing ion conductivity in the lithium rechargeable battery. In addition, in case an inorganic fine particle with a high dielectric constant is used, it contributes to the increase of dissociation of electrolyte salt, for example lithium salt, in the liquid electrolyte, thereby improving ion conductivity of the electrolyte.

For example, the inorganic fine particles may include one or more types of inorganic fine particles selected from the group consisting of alumina ($Al_2O_3$), boehmite (AlOOH), aluminum hydroxide ($Al(OH)_3$), silicon dioxide ($SiO_2$), titanium dioxide ($TiO_2$), and magnesium hydroxide ($Mg(OH)_2$).

The inorganic fine particles may not be substituted with a separate functional group or a separate compound on the surface, and the inorganic fine particles may include inorganic fine particles surface-modified with one or more compounds selected from the group consisting of a (meth)acrylate, a thiol group, and an organic silane compound. The functional group or compound substituted on the surface of the inorganic particle can be selected in consideration of the physical properties, type or the like of the binder resin of the porous layer.

Meanwhile, as mentioned above, in one embodiment, the binder resin may function to connect or bind the inorganic fine particles or to fix them, and the binder resin may include a (co)polymer containing a repeating unit derived from a urethane (meth)acrylate-based monomer or oligomer.

Examples of the urethane (meth)acrylate-based monomer or oligomer include at least one selected from the group consisting of polyester (meth)urethane acrylate, polyester urethane di(meth)acrylate, polyether (meth)urethane acrylate, and polyether urethane di(meth)acrylate.

The specific molecular weight of the urethane (meth)acrylate-based oligomer is not limited, but for example, it may have a weight average molecular weight (a weight average molecular weight using polystyrene calibration measured by a GPC method) of 50,000 g/mol or less, 40,000 g/mol or less, 30,000 g/mol or less, or 300 g/mol or more, 1,000 g/mol or more, 3,000 g/mol or more, and 300 to 50,000 g/mol, 1,000 to 50,000 g/mol, 3,000 to 50,000 g/mol, or 3,000 to 30,000 g/mol.

Meanwhile, the (co)polymer may further include a repeating unit derived from a polyfunctional acrylate together with a repeating unit derived from the urethane (meth)acrylate-based monomer or oligomer.

The polyfunctional acrylate may be a polyfunctional (meth)acrylate monomer or oligomer, wherein the number of (meth)acrylate-based functional groups may be 2 to 10, preferably 2 to 8, and more preferably 2 to 7.

Examples of the polyfunctional acrylate may be at least one selected from the group consisting of pentaerythritol tri(meth)acrylate, pentaerythritol tetra(meth)acrylate, dipentaerythritol penta(meth)acrylate, dipentaerythritol hexa(meth)acrylate, dipentaerythritol hepta(meth)acrylate, tripentaerythritol hepta(meth)acrylate, trilene diisocyanate, xylene diisocyanate, hexamethylene diisocyanate, trimethylolpropane tri(meth)acrylate, and trimethylolpropane polyethoxy tri(meth)acrylate, and specific examples are not limited thereto.

The (co)polymer may include a repeating unit derived from the urethane (meth)acrylate-based monomer or oligomer and a repeating unit derived from the polyfunctional acrylate in an appropriate amount in consideration of the specific physical properties of the porous layer, and the like.

Meanwhile, the porous layer is formed by curing (heat-curing or photo-curing) together with the binder resin and the inorganic particles. The components and inorganic particles contained in the binder resin form a crosslinked bond or a covalent bond, thereby capable of improving the heat resistance, mechanical strength, and the like of the porous layer and the electrode for a lithium rechargeable battery.

The content of the repeating unit derived from the urethane (meth)acrylate monomer or oligomer in the (co)polymer is not particularly limited, and for example, the (co)polymer may contain 1 to 99% by weight, or 10 to 90% by weight of repeating units derived from the urethane (meth)acrylate-based monomer or oligomer.

Meanwhile, in one embodiment, the thickness of the porous layer is not particularly limited, and can be adjusted to, for example, 0.01 to 100 $\mu$m in consideration of battery performance.

For example, the porous layer may have a thickness of 0.1 $\mu$m or more and 30 $\mu$m or less.

More specifically, the thickness of the porous layer may be 0.1 $\mu$m or more, 1 $\mu$m or more, 5 $\mu$m or more, 10 $\mu$m or more, or 30 $\mu$m or less, or it may be 0.1 $\mu$m or more and 30 $\mu$m or less, 1 $\mu$m or more and 30 $\mu$m or less, 5 $\mu$m or more and 30 $\mu$m or less, and 10 $\mu$m or more and 30 $\mu$m or less.

If the thickness of the porous layer is less than 0.1 $\mu$m, a short circuit of the lithium rechargeable battery may occur as coating uniformity deteriorates. If the thickness exceeds 30 $\mu$m, the ionic conductivity of lithium ions may decrease, which may lower battery performance, and as the volume increases when multiple cells are stacked, the energy density of the lithium rechargeable battery may deteriorate.

Meanwhile, the electrode for a lithium rechargeable battery may be a negative electrode for a lithium rechargeable battery, or may be a positive electrode for a lithium rechargeable battery. As mentioned above, when applying the provided electrode for a lithium rechargeable battery, a separate porous polymer separator may not be provided, sufficient interface adhesive strength with the positive electrode can be secured, and the battery life can also be relatively increased.

Meanwhile, the electrode for the lithium rechargeable battery can be obtained by coating a composition for forming a porous layer including a binder containing a urethane (meth)acrylate-based monomer or oligomer, and inorganic fine particles onto the electrode substrate, and heat-curing or photo-curing the applied result.

In the step of coating the composition for forming the porous layer, a conventional coating method known in the art can be used, and for example, a variety of methods, such as spin coating, dip coating, die coating, roll coating, comma coating, gravure coating, bar coating, curtain coating, extrusion coating, casting, screen printing, inkjet printing, doctor blading, or a combination of these can be used.

In the step of photo-curing the composition for forming a porous layer, ultraviolet rays or visible light having a wavelength of 200 to 400 nm may be irradiated, and the exposure amount during irradiation is preferably 100 to 4,000 mJ/cm$^2$. The exposure time is also not particularly limited, and can be appropriately changed depending on the exposure device used, the wavelength of the irradiation light, or the exposure amount.

Further, in the step of photo-curing the photocurable coating composition, nitrogen purge or the like may be performed to apply nitrogen atmospheric conditions.

The composition for forming a porous layer can be applied and dried after curing. In the drying step, the drying method is not particularly limited, and any known method can be used. Examples include drying using warm air, hot air, or low humidity air, vacuum drying, and drying using irradiation with infrared rays or electron beams. For example, the drying may be performed under normal or pressurized conditions in a drying chamber, optionally by applying heat or hot air to the substrate.

The temperature applied during the drying is not particularly limited, but may be determined depending on the type of component, solvent, or non-solvent used. For example, the drying may be performed at a temperature of 60°C or more, 80°C or more, 90°C or more, and 150°C or less, 120°C or less, 110°C or less, 80°C or more and 140°C or less, 90°C or more and 120°C or less, 80°C or more and 110°C or less, 90°C or more and 110 °C or less.

When photo-curing the composition for forming a porous layer, the photopolymerization initiator may be included. The photopolymerization initiator may be used without particular limitation as long as it is a compound known to be used in a photocurable resin composition. Specifically, a benzophenone-based compound, an acetophenone-based compound, a biimidazole-based compound, a triazine-based compound, an oxime-based compound, or a mixtures of two or more thereof can be used.

The composition for forming a porous layer may further include an organic solvent. Non-limiting examples of the organic solvent include ketones, alcohols, acetates, and ethers, or mixtures of two or more thereof. Specific examples of such organic solvents include ketones such as methyl ethyl ketone, methyl isobutyl ketone, acetylacetone, or isobutyl ketone; alcohols such as methanol, ethanol, diacetone alcohol, n-propanol, i-propanol, n-butanol, i-butanol, or t-butanol; acetates such as ethyl acetate, i-propyl acetate, or polyethylene glycol monomethyl ether acetate; ethers such as tetrahydrofuran or propylene glycol monomethyl ether; or a mixture of two or more thereof.

Meanwhile, the composition for forming a porous layer may optionally further include a dispersant.

The dispersant can increase the dispersibility of the inorganic fine particles or prevent agglomeration of particles during the formation of the porous layer, and can improve the surface properties of the porous layer being produced, thereby improving the mechanical properties and resistance properties of the porous layer, and the like.

After separately forming a particle dispersion liquid containing the inorganic fine particles, a dispersant, and an organic solvent, the particle dispersion liquid can also be mixed with a photocurable composition including a binder containing a urethane (meth)acrylate monomer or oligomer and a photopolymerization initiator to form a composition for forming a porous layer. The porous layer may be formed by heat-curing or photo-curing the result thus applied.

The type of dispersant, and the like are not particularly limited, but specific examples of the dispersant include monoesters or diesters of phosphoric acid or acidic dicarboxylic acid monoesters having an acid value of 90 to 110 KOH/g.

More specifically, the following groups of dispersants can be used: (a) mono-esters or diesters of phosphoric acid, such as, for example, monoesters or diesters of phosphoric acid containing alkyl, aryl, aralkyl or alkylaryl alkoxylates (e.g. nonylphenol ethoxylates, isotridecyl alcohol ethoxylates, alkylene oxide polyethers prepared starting from butanol), monoesters or diesters of phosphoric acid containing polyesters (e.g. lactone polyesters, such as caprolactone polyesters or mixed caprolactone/valero-lactone polyesters), or

(b) acidic dicarboxylic monoesters, examples being acidic dicarboxylic monoesters (more particularly of succinic acid, maleic acid or phthalic acid) containing alkyl, aryl, aralkyl, or alkylaryl alkoxylates (e.g. nonylphenol ethoxylates, isotridecyl alcohol ethoxylates or alkylene oxide polyethers prepared starting from butanol), and the like.

The content or usage amount of the dispersant is also not particularly limited, but for example, 0.01 to 30 parts by weight, 0.1 to 20 parts by weight, 0.5 to 15 parts by weight, or 1 to 10 parts by weight of the dispersant relative to 100 parts by weight of the inorganic fine particles can be used.

Meanwhile, according to another embodiment of the present invention, there can be provided a lithium rechargeable battery comprising the electrode for a lithium rechargeable battery. Specifically, the lithium rechargeable battery may include an electrode for a lithium rechargeable battery of one embodiment, a counter electrode, and an electrolyte interposed between them.

The electrode for a lithium rechargeable battery may be a positive electrode for a lithium rechargeable battery, or may be a negative electrode for a lithium rechargeable battery.

The electrode for the lithium rechargeable battery includes all of the contents described above.

As mentioned above, the lithium rechargeable battery of the one embodiment includes an electrode for a lithium rechargeable battery including the porous layer as a separator, instead of a porous polymer separator including a porous substrate and a coating layer formed on the porous substrate, the adhesive force is maintained even if the electrode expands and contracts, thereby making it possible to realize excellent battery life characteristics.

The negative electrode may include a negative electrode material including a negative electrode active material, a conductive material, and a binder; and a current collector supporting the negative electrode material.

The negative electrode active material may include a material capable of reversibly intercalating and deintercalating lithium ions, a lithium metal, a lithium metal alloy, a material capable of doping and dedoping lithium, and a transition metal oxide.

As the material capable of reversibly intercalating and de-intercalating lithium ions, crystalline carbon, amorphous carbon, or a mixture thereof may be exemplified as a carbonaceous material. Specifically, the carbonaceous material may be natural graphite, artificial graphite, kish graphite, pyrolytic carbon, mesophase pitches, mesophase pitch based carbon fiber, meso-carbon microbeads, petroleum or coal tar pitch derived cokes, soft carbon, hard carbon, and the like.

The lithium metal alloy may include an alloy of lithium and a metal selected from the group consisting of Na, K, Rb, Cs, Fr, Be, Mg, Ca, Sr, Si, Sb, Pb, In, Zn, Ba, Ra, Ge, Al, Sn, Bi, Ga, and Cd.

The material capable of doping and dedoping lithium may include Si, a Si-C composite, $SiO_x$ (0<x<2), a Si-Q alloy (wherein Q is an element selected from the group consisting of alkali metals, alkali earth metals, group 13 elements, group 14 elements, group 15 elements, group 16 elements, transition metals, rare earth elements, and a combination thereof, but is not Si), Sn, $SnO_2$, Sn-R alloy (wherein R is an element selected from the group consisting of alkali metals, alkali earth metals, group 13 elements, group 14 elements, group 15 elements, group 16 elements, transition metals, rare earth elements, and a combination thereof, but is not Sn), and the like.

In addition, as the material capable of doping and dedoping lithium, at least one of the above examples can also be mixed with $SiO_2$ and then used. The Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and the like.

And, the transition metal oxide may include vanadium oxide, lithium vanadium oxide, lithium titanium oxide, and the like.

The negative electrode current collector is generally fabricated to have a thickness of 3 to 500 $\mu$m. Such a negative electrode current collector is not particularly limited as long as it has high conductivity without causing chemical changes to the corresponding battery. For example, copper, stainless steel, aluminum, nickel, titanium, calcined carbon, copper or stainless steel whose surface is treated with carbon, nickel, titanium, silver, etc., aluminum-cadmium alloy, and the like may be used.

In addition, similarly to the positive electrode current collector, the negative electrode current collector may also be processed to form fine irregularities on the surface thereof so as to enhance adhesion to the negative electrode active material, and the current collector can be used in various forms such as a film, a sheet, a foil, a net, a porous body, a foaming body, and a non-woven fabric structure.

Preferably, the negative electrode may include a negative electrode active material including at least one selected from the group consisting of a carbonaceous material and a silicon compound.

Here, the carbonaceous material is a material containing at least one selected from the group consisting of natural graphite, artificial graphite, kish graphite, pyrolytic carbon, mesophase pitches, mesophase pitch based carbon fiber, meso-carbon microbeads, petroleum or coal tar pitch derived cokes, soft carbon, and hard carbon, as previously exemplified. In addition, the silicon compound may be a compound containing Si previously exemplified, that is, Si, a Si-C composite, SiOx (wherein 0<x<2), the Si-Q alloy, mixtures thereof, or a mixture of at least one thereof and $SiO_2$.

Further, the negative electrode may include micro silicon. When the negative electrode includes micro silicon, it is possible to realize a superior capacity compared to the case where a carbonaceous material is used as a negative electrode active material. Specifically, when a specific micro silicon is used as the silicon compound, it is possible to maintain a remaining capacity of 80% or more even after charging and discharging 500 times or more, and realize significantly superior energy density to conventional lithium rechargeable batteries. Further, when the negative electrode includes micro silicon, the charge/discharge life of a solid battery using a solid electrolyte can be greatly increased, and the charging speed at room temperature can also be greatly improved.

Although the size of the micro silicon is not particularly limited, but for example, the micro silicon may have a diameter of 100 $\mu$m or less, or a diameter of 1 to 100 $\mu$m, or a diameter of 1 to 20 $\mu$m.

Meanwhile, the negative electrode active material may be contained in an amount of 85% to 98% by weight relative to the total weight of the negative electrode material.

Specifically, the content of the negative electrode active material may be 85% by weight or more, or 87% by weight or more, or 90% by weight or more; and 98% by weight or less, or 97% by weight or less, or 96% by weight or less relative to the total weight of the negative electrode material. Preferably, the content of the negative electrode active material may be 85% by weight or more and 98% by weight or less, 85% by weight or more and 97% by weight or less, 85% by weight or more and 96% by weight or less, 87% by weight or more and 98% by weight or less, 87% by weight or more and 97% by weight or less, 87% by weight or more and 96% by weight or less, 90% by weight or more and 98% by weight or less, 90% by weight or more and 97% by weight or less, 90% by weight or more and 96% by weight or less relative to the total weight of the negative electrode material.

The conductive material is used to impart conductivity to the electrode.

The conductive material can be used without particular limitation as long as it has electronic conductivity without causing chemical changes in the battery. As a non-limiting example, the conductive material may include carbon-based materials such as carbon black, acetylene black, KETJEN black, channel black, furnace black, lamp black, thermal black, carbon graphene and carbon fiber; graphite such as natural graphite and artificial graphite; metal powder or metal fibers such as copper, nickel, aluminum and silver; conductive whiskey such as zinc oxide and potassium titanate; conductive metal oxides such as titanium oxide; or a conductive polymer such as a polyphenylene derivative. As the conductive material, any one alone or a mixture of two or more of the above-mentioned examples may be used.

The content of the conductive material may be adjusted within a range that does not cause a decrease in capacity of the battery while exhibiting an appropriate level of conductivity. Preferably, the content of the conductive material may be 0.5% to 10% by weight, or 1% to 10% by weight, or 1% to 5% by weight relative to the total weight of the negative electrode material.

The binder is used to properly attach the negative electrode material to the current collector. As a non-limiting example, the binder may include polyvinylidenefluoride(PVdF), a polyvinylidenefluoride-hexafluoropropylene copolymer(PVdF-co-HFP), polyvinyl alcohol, polyacrylonitrile, carboxymethylcellulose(CMC), starch, hydroxypropylcellulose, regenerated cellulose, polyvinylpyrrolidone, tetrafluoroethylene, polyethylene, polypropylene, ethylenepropylene-diene polymer (EPDM), sulfonated-EPDM, styrene-butadiene rubber (SBR), fluorine rubber, and the like. As the binder, any one alone or a mixture of two or more of the above-mentioned examples may be used.

The content of the binder may be adjusted within a range that does not cause a decrease in battery capacity while exhibiting an appropriate level of adhesiveness. Preferably, the content of the binder may be 0.5% by weight to 10% by weight, 1% by weight to 10% by weight, or 1% by weight to 5% by weight relative to the total weight of the negative electrode material.

The lithium rechargeable battery may, optionally, further include a porous polymer substrate.

The type of the porous polymer substrate is not particularly limited, but for example, a polymer substrate formed from one or more polymers selected from the group consisting of polyethylene, polypropylene, polyethyleneterephthalate, polybutyleneterephthalate, polyester, polyacetal, polyamide, polycarbonate, polyimide, polyetheretherketone, polyaryryletherketone, polyetherimide, polyamideimide, polybenzimidazole, polyethersulfone, polyphenyleneoxide, cyclic olefin copolymer, polyphenylenesulfide, and polyethylenenaphthalene, or a mixture of two or more thereof, or a multilayer film, woven fabric, or non-woven fabric thereof, can be used.

The porous polymer substrate can adjust the type and thickness of the substrate, the diameter and number of pores, and especially the thickness of ultrafine threads in the case of non-woven fabrics, taking into consideration the melting temperature, manufacturing convenience, porosity degree, ion movement, insulation properties, or the like.

The thickness of the porous polymer substrate is not particularly limited and may be adjusted to, for example, 0.01 to 100 $\mu$m in consideration of the battery performance.

The positive electrode for a lithium rechargeable battery may include a positive electrode active material, a binder, a conductive material, and a positive electrode additive.

The positive electrode additive for a lithium rechargeable battery has a property of irreversibly releasing lithium during charging and discharging of the lithium rechargeable battery. Therefore, the positive electrode additive for a lithium rechargeable battery may be included in a positive electrode for a lithium rechargeable battery and serve as a sacrificial positive electrode material for prelithiation.

Specifically, the positive electrode can be manufactured by coating a positive electrode mixture onto a positive electrode current collector and then drying it, and if necessary, a filler can be further added to the mixture.

The positive electrode for a lithium rechargeable battery comprises a positive electrode material including a positive electrode active material, a conductive material, the sacrificial positive electrode material, and a binder; and a current collector supporting the positive electrode material.

As it goes toward higher capacity batteries, the ratio of the negative electrode active material in the negative electrode must be higher in order to increase the capacity of the battery, which also increases the amount of lithium consumed in the SEI layer. Therefore, the design capacity of the battery can be determined by calculating the amount of lithium consumed in the SEI layer of the negative electrode and then back-calculating the amount of the sacrificial positive electrode material to be applied to the positive electrode side.

According to one embodiment, the sacrificial positive electrode material may be contained in an amount of more than 0% by weight and 15% by weight or less relative to the total weight of the positive electrode material. In order to compensate for the irreversible lithium consumed in the formation of the SEI layer, the content of the sacrificial positive electrode material is preferably greater than 0% by weight relative to the total weight of the positive electrode material. However, when the sacrificial positive electrode material is contained in an excessive amount, the content of the positive electrode active material showing reversible charge/discharge capacity decreases, and the capacity of the battery decreases, and the residual lithium in the battery is plated on the negative electrode, causing a short circuit of the battery or impairing safety. Therefore, the content of the sacrificial positive electrode material is preferably 15% by weight or less relative to the total weight of the positive electrode material.

Specifically, the content of the sacrificial positive electrode material may be more than 0% by weight, or 0.5% by weight or more, or 1% by weight or more, or 2% by weight or more, or 3% by weight or more; and 15% by weight or less, or 12% by weight or less, or 10% by weight or less relative to the total weight of the positive electrode material.

As the positive electrode active material, compounds known to be applicable to lithium rechargeable batteries in the technical field to which the present disclosure pertains can be used without particular limitation.

As a non-limiting example, the positive electrode active material may include NCM($Li[Ni,Co,Mn]O_2$), NCMA($Li[Ni,Co,Mn,Al]O_2$), $LiCoO_2$, $LiNiO_2$, $LiMnO_2$, $LiMn_2O_2$, $LiNi_{1-d}CO_dO_2$, $LiCo_{1-d}Mn_dO_2$, $LiNi_{1-d}Mn_dO_2$ (wherein, $0 \leq d < 1$), $Li(Ni_aCo_bMn_c)O_4$ ($0<a<2$, $0<b<2$, $0<c<2$, $a+b+c=2$), $LiMn_{2-e}Ni_eO_4$, $LiMn_{2-e}Co_eO_4$ (wherein, $0 < e < 2$), $LiCoPO_4$, and $LiFePO_4$, and the like. As the positive electrode active material, one or a mixture of two or more of the above-mentioned examples may be used.

According to one embodiment of the invention, the positive electrode active material may be contained in an amount of 80% by weight to 98% by weight relative to the total weight of the positive electrode material. Specifically, the content of the positive electrode active material may be 80% by weight or more, or 82% by weight or more, or 85% by weight or more, and 98% by weight or less relative to the total weight of the positive electrode material.

The positive electrode for a lithium rechargeable battery can be formed by stacking a positive electrode material including the positive electrode active material, the conductive material, the sacrificial positive electrode material, and a binder on the current collector. The filler is selectively used as a component that suppresses expansion of the positive electrode, and is not particularly limited as long as it is a fibrous material without causing chemical change in the battery. For example, olefinic polymers such as polyethylene and polypropylene; and fibrous materials such as glass fibers and carbon fibers are used. The details of the conductive material, the binder, and the current collector included in the positive electrode material include all the contents described above.

Meanwhile, the electrolyte can be used without particular limitation as long as it is known to be applicable to a lithium rechargeable battery in the technical field to which the disclosure pertains. For example, the electrolyte may include an organic liquid electrolyte, an inorganic liquid electrolyte, a solid polymer electrolyte, a gel polymer electrolyte, a solid inorganic electrolyte, a molten inorganic electrolyte, an aqueous electrolyte, or the like.

The aqueous electrolyte is the one obtained by dissolving a salt in an aqueous solvent such as water or alcohol, and a lithium rechargeable battery using such an aqueous electrolyte offers advantages in terms of high ionic conductivity and safety of the aqueous electrolyte, and inexpensive in process and manufacturing cost. In addition, a battery using an aqueous electrolyte rather than a non-aqueous organic electrolyte has an advantage in terms of environment.

Specifically, the aqueous electrolyte may include an aqueous solvent and a lithium salt. The aqueous solvent is a solvent containing water, and is not particularly limited, but may contain 1% by weight or more of water relative to the total weight of the aqueous solvent that constitutes the electrolyte. As the aqueous solvent, water may be used alone, or a solvent miscible with water may be used in combination.

The water-miscible solvent may be a polar solvent, and can include, for example, at least one selected from the group consisting of a C1-C5 alcohol and a C1-C10 glycol ether.

For example, the C1 to C5 alcohol may be at least one selected from the group consisting of methanol, ethanol, n-propanol, isopropanol, ethylene glycol, 1,2-propanediol, 1,3-propanediol, 1,2-butanediol, 1,3-butanediol, 1,4-butanediol, glycerol and 1,2,4-butanetriol, but is not limited thereto.

Further, the C1-C10 glycol ether may be at least one selected from the group consisting of ethylene glycol monomethyl ether(MG), diethylene glycol monomethyl ether(MDG), triethylene glycol monomethyl ether(MTG), polyethylene glycol monomethyl ether(MPG), ethylene glycol monoethyl ether(EG), diethylene glycol monoethyl ether(EDG), ethylene glycol monobutyl ether(BG), diethylene glycol monobutyl ether(BDG), triethylene glycol monobutyl ether(BTG), propylene glycol monomethyl ether(MFG), and dipropylene glycol monomethyl ether(MFDG), but is not limited thereto.

The lithium salt contained in the electrolyte dissolves in the aqueous solvent and acts as a source of lithium ions in the battery, which enables basic operation of the lithium rechargeable battery and facilitates the movement of lithium ions between the positive electrode and the negative electrode.

Specifically, the lithium salt includes $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiN(SO_2F)_2$ (LiFSI, lithium bis(fluorosulfonyl)imide), $LiCl$, $LiI$, $LiB(C_2O_4)_2$, and the like. Preferably, the lithium salt may be $LiPF_6$, LiFSI, and a mixture thereof.

The lithium salt may be contained in the electrolyte at a concentration of 0.1 M to 2.0 M. The lithium salt contained in the concentration range imparts appropriate conductivity and viscosity to the electrolyte, thereby exhibiting excellent electrolyte performance.

Alternatively, the electrolyte can comprise a non-aqueous organic solvent and a lithium salt.

The non-aqueous organic solvent can be used without particular limitation as long as it can serve as a medium through which ions involved in the electrochemical reaction of the battery can move.

Specifically, the non-aqueous organic solvent includes an ester-based solvent such as methyl acetate, ethyl acetate, γ-butyrolactone, and ε-caprolactone; an ether-based solvent such as dibutyl ether and tetrahydrofuran; a ketone-based solvent such as cyclohexanone; an aromatic hydrocarbon-based solvent such as benzene and fluorobenzene; a carbonate-based solvent such as dimethyl carbonate(DMC), diethyl carbonate(DEC), methyl ethyl carbonate(MEC), ethyl methyl carbonate(EMC), ethylene carbonate(EC), and propylene carbonate(PC); an alcohol-based solvent such as ethyl alcohol and isopropyl alcohol; nitriles such as R-CN (wherein R is a C2 to C20 linear, branched or cyclic hydrocarbon group, which may contain a double-bonded aromatic ring or an ether bond); amides such as dimethylformamide; dioxolanes such as 1,3-dioxolane; sulfolane, and the like.

Among the above examples, a carbonate-based solvent can be preferably used as the non-aqueous organic solvent. In particular, considering the charge and discharge performance of the battery and compatibility with the sacrificial positive electrode material, the non-aqueous organic solvent may be preferably a mixture of a cyclic carbonate having high ion conductivity and a high dielectric constant (e.g., ethylene carbonate and propylene carbonate) and a linear carbonate having low viscosity carbonates (e.g., ethyl methyl carbonate, dimethyl carbonate, and diethyl carbonate). In this case, mixing and using the cyclic carbonate and the linear carbonate at a volume ratio of 1:1 to 1:9 may be advantageous for achieving the above-mentioned performance.

In addition, as the non-aqueous organic solvent, a solvent in which ethylene carbonate (EC) and ethyl methyl carbonate (EMC) are mixed at a volume ratio of 1:2 to 1:10; or a solvent in which ethylene carbonate (EC), ethyl methyl carbonate (EMC) and dimethyl carbonate (DMC) are mixed in a volume ratio of 1~3:1~9:1 can be preferably used.

The lithium salt contained in the electrolyte is dissolved in the non-aqueous organic solvent, and acts as a source of lithium ions in the battery, which enables basic operation of the lithium rechargeable battery and facilitates movement of lithium ions between the positive electrode and the negative electrode.

Specifically, the lithium salt may include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiN(SO_2F)_2$ (LiFSI, lithium bis(fluorosulfonyl)imide), $LiCl$,

LiI, $LiB(C_2O_4)_2$, and the like. Preferably, the lithium salt may be $LiPF_6$, LiFSI, and a mixture thereof.

The lithium salt may be contained in the electrolyte at a concentration of 0.1 M to 2.0 M. The lithium salt contained in the concentration range imparts appropriate conductivity and viscosity to the electrolyte, thereby exhibiting excellent electrolyte performance.

Optionally, the electrolyte may contain additives for the purpose of improving battery life characteristics, suppressing decrease of capacity in the battery, improving battery discharge capacity, and the like.

For example, the additive may include a haloalkylene carbonate-based compound such as difluoroethylene carbonate; or pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, aluminum trichloride, and the like. The additive may be contained in an amount of 0.1% to 5% by weight with respect to the total weight of the electrolyte.

The lithium rechargeable battery of one embodiment may be a lithium ion battery, a lithium ion polymer battery, or a lithium polymer battery, depending on the type of electrolyte.

The liquid electrolyte may be a lithium salt-containing non-aqueous electrolyte. The lithium salt-containing non-aqueous electrolyte is composed of a non-aqueous electrolyte and lithium, and the non-aqueous electrolyte includes a non-aqueous organic solvent, an organic solid electrolyte, an inorganic solid electrolyte, and the like, but are not limited thereto.

The organic solid electrolyte may include polyethylene derivatives, polyethylene oxide derivatives, polypropylene oxide derivatives, phosphoric acid ester polymers, polyagitation lysine, polyester sulfide, polyvinyl alcohols, polyvinylidene fluoride, and polymers containing ionic dissociation groups.

As the inorganic solid electrolyte, nitrides, halides, and sulfates of Li such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, and $Li_3PO_4$-$Li_2S$-$SiS_2$ may be used.

Additionally, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride or the like may be added to the non-aqueous electrolyte. If necessary, in order to impart incombustibility, the non-aqueous electrolyte may further include halogen-containing solvents such as carbon tetrachloride and ethylene trifluoride. Further, in order to improve high-temperature storage characteristics, the non-aqueous electrolyte may further contain carbon dioxide gas or the like and may further contain fluoro-ethylene carbonate(FEC), propene sulfone(PRS) and the like.

In one specific example, the lithium salt-containing non-aqueous electrolyte can be prepared by adding a lithium salt such as $LiPF_6$, $LiClO_4$, $LiBF_4$ and $LiN(SO_2CF_3)_2$, to a mixed solvent of a cyclic carbonate such as EC or PC as a highly dielectric solvent and a linear carbonate such as DEC, DMC or EMC as a low-viscosity solvent.

The lithium rechargeable battery can be used as an energy source having improved performance and safety in the field of portable electronic devices such as mobile phones, notebook computers, tablet computers, mobile batteries, and digital cameras; and the field of transport means such as electric vehicles, electric motorcycles, and personal mobility devices.

The lithium rechargeable battery may have various shapes such as a prismatic shape, a cylindrical shape, and a pouch shape.

The lithium rechargeable battery of another embodiment described above can be realized as a battery module including the same as a unit cell, a battery pack including the battery module, and a device including the battery pack as a power source.

At this time, specific examples of the device may be an electric vehicle, a hybrid electric vehicle, a plug-in hybrid electric vehicle, and a system for power storage, but is not limited thereto.

In the above embodiment, the porous layer is coated, and then assembled through a process such as winding or stacking (lamination), to which the electrolyte is then injected, thereby manufacturing a lithium rechargeable battery.

On the other hand, the lithium rechargeable battery of one embodiment may have a peeling strength of 10 gf/20 mm or more when the electrode for the lithium rechargeable battery is peeled at 90 degrees with respect to the counter electrode. The peel strength can be realized in accordance with the composition of the porous layer.

Specifically, the lithium rechargeable battery of one embodiment may have a peeling strength of 10 gf/20 mm or more, 20 gf/20 mm or more, 30 gf/20 mm or more, 200 gf/20 mm or less, 180 gf/20 mm or less, 150 gf/20 mm or less, and 10 gf/20 mm or more and 200 gf/20 mm or less, 20 gf/20 mm or more and 200 gf/20 mm or less, 30 gf/20 mm or more and 180 gf/20 mm or less, 30 gf/20 mm or more and 150 gf/20 mm or less when the electrode for a lithium rechargeable battery is peeled at 90 degrees with respect to the counter electrode.

When the electrode for a lithium rechargeable battery is peeled at 90 degrees with respect to the counter electrode, the peeling strength may be 10 gf/20 mm or more. The peel strength can be measured according to the ASTM D6862 measurement method using a Texture Analyzer.

In addition, the lithium rechargeable battery of the above embodiment may have a coulombic efficiency of 75% or more and 99% or less, 75% or more and 90% or less, and 75% or more and 83% or less. The coulombic efficiency can be calculated as the ratio of discharge capacity to charge capacity.

[EXAMPLES]

Hereinafter, actions and effects of the disclosure will be described in more detail with reference to specific examples of the invention. However, this is presented as an example to aid in the understanding of the disclosure. The following examples are not intended to limit the scope of the disclosure in any way.

<Preparation Examples 1 to 6: Preparation of Particle Dispersion Liquid and Coating Composition for Forming Porous Layer>

(1) Preparation of Particle Dispersion Liquid

The components of the particle dispersion listed in Table 1 below were mixed and then shaken at 200 rpm for 24 hours in an orbital shaker using 1 mm beads to form a particle dispersion liquid.

(2) Preparation of Coating Composition for Forming Porous Layer

After mixing the components of the photocurable composition shown in Table 1 below, they were mixed with the obtained particle dispersion liquid to prepare a coating composition for forming a porous layer.

[Table 1]

| | | Preparation Example 1 | Preparation Example 2 | Preparation Example 3 | Preparation Example 4 | Preparation Example 5 | Preparation Example 6 |
|---|---|---|---|---|---|---|---|
| Particle dispersion liquid | Boehmite | 24.503 | 23.531 | 23.561 | 23.423 | 24.493 | 25.091 |
| | Dispersant (BYK-102) | 1.225 | 1.177 | 1.178 | 1.171 | 1.225 | 1.255 |
| | Solvent (MIBK) | 36.755 | 35.297 | 35.342 | 35.135 | 36.740 | 37.636 |
| Photocurable composition | UA5216 | 8.168 | 5.297 | 6.911 | 6.161 | | |
| | BR-345 | | 0.589 | | | | |
| | Linc3A | | 1.962 | 1.213 | 2.048 | | |
| | DPHA | | | | | 8.164 | |
| | HEA | | | | | | 8.364 |
| | Photoinitiator (TPO) | 0.408 | 0.431 | 0.487 | 0.410 | 0.449 | 0.585 |
| | Solvent (MIBK) | 12.517 | 31.716 | 14.219 | 11.223 | 12.512 | 27.069 |
| | CyH | 16.424 | | 17.089 | | 16.417 | |
| | t-butyl alcohol | | | | 20.429 | | |
| Total amount (g) | | 100.000 | 100.000 | 100.000 | 100.000 | 100.000 | 100.000 |

(continued)

|  |  | Preparation Example 1 | Preparation Example 2 | Preparation Example 3 | Preparation Example 4 | Preparation Example 5 | Preparation Example 6 |
|---|---|---|---|---|---|---|---|
| Solid content |  | 34.3 | 33.0 | 33.4 | 33.2 | 34.3 | 35.3 |

MIBK: Methyl isobutyl ketone
cyH: Cyclohexanone
Boehmite: Aluminum hydroxide particles having an average particle diameter of primary particles of about 50 to 60 nm and a D50 of secondary particles of about 130 nm.
Dispersant(BYK-102): Poly(oxy-1,2-ethanediyl) a-isotridecyl-w-hydroxy- phosphate copolymer with acidic group (acid value: 101 mg KOH/g)
UA5216 (manufactured by Miwon Specialty): Containing about 40% of polyester urethane diacrylate (weight average molecular weight: 30,000 g/mol) (diluted with isobornyl acrylate)
BR-345: Difunctional polyether urethane acrylate (manufactured by Bomar) (solid content: about 100 wt.%)
Linc-3A: Fluorine-based (meth)acrylate compound (manufactured by Kyoeisha) (solid content: about 100 wt.%)
DPHA: Dipentaerythritol hexaacrylate
PETA: Pentaerythritol triacrylate
IBOA: Isobornyl acrylate
HEA: 2-Hydroxyethyl acrylate

**<Example and Comparative Example: Manufacture of Electrode for Lithium Rechargeable Battery and Lithium Rechargeable Battery>**

**Examples 1 to 4**

(1) Manufacture of negative electrode single-sided electrode

Carbon-based powder and silicon-based powder as a negative electrode active material, carbon black as a conductive material, and styrene-butadiene rubber(SBR) and carboxymethyl cellulose(CMC) as a binder were added to distilled water (DIWater) as a solvent in an amount of 91.5 wt.%, 4 wt.%, 1.5 wt.%, 2 wt.% and 1 wt.%, respectively, to prepare a slurry for an electrode layer. The slurry for an electrode layer was coated onto one surface of a copper (Cu) thin film with a thickness of 10 $\mu$m as a current collector, dried and then subjected to a roll press to manufacture an electrode.

(2) Production of half-cell (single-sided)

The composition for forming a porous layer obtained above was coated onto the single-sided electrode manufactured above to a constant thickness of 15 to 20 $\mu$m using a #30 Mayer bar, and dried at 110°C for 2 minutes to manufacture a negative electrode having a porous layer formed thereon.
The lithium metal with a thickness of 0.3 mm was assembled on the negative electrode having a porous layer formed thereon using a stacking method, and an electrolyte solution (ethylene carbonate(EC)/ethylmethyl carbonate(EMC) = 3/7 (volume ratio), 1 mol of lithium hexafluorophosphate ($LiPF_6$)) was injected into the assembled battery to produce a lithium rechargeable battery.

**Comparative Examples 1 and 2**

An electrode for a lithium rechargeable battery and a lithium rechargeable battery were manufactured in the same manner as in Example 1, except that the particle dispersion liquid and the coating composition for forming a porous layer of Preparation Examples 5 and 7 were used, respectively.

**<Experimental Example>**

**Experimental Example 1: Measurement of Bending Resistance**

As shown in FIG. 1, the negative electrode single-sided electrodes including the porous layer manufactured in Examples and Comparative Examples were subjected to a cylindrical mandrel test from a large diameter to a small diameter according to the ISO1519: 2011 standard method to determine bending resistance.

The sample was prepared by cutting it into a size of 12 cm in length and 2.5 cm in width. The copper current collector surface of the negative electrode single-sided electrode was brought into contact with one portion of the cylindrical mandrel, and the negative electrode single-sided sample was slowly wound around a cylindrical mandrel so that the coating layer could be bent at 180 degrees.

The bending resistance value was determined by the diameter of the largest first mandrel at which a crack occurred in the coating layer, or the coating layer and the electrode layer together were separated from the current collector.

**Experimental Example 2: Analysis of Porous Layer**

The thickness and porosity of the porous layer of the lithium rechargeable batteries produced in each of Examples and Comparative Examples were analyzed, and are shown in Table 1 below.

The porosity of the porous layer was calculated as follows.

The thickness of the porous layer was measured to calculate the volume of the porous layer for a certain area. The weight of only the porous layer, excluding the weight of the electrode substrate and the current collector among the sample weight, was calculated, and the actual density of the porous layer was calculated by dividing the volume from the weight. The theoretical density when the solid composition of the porous layer was 100% concentrated was calculated, and the porosity was calculated according to the following Mathematical Equation 1.

[Mathematical Equation 1]

$$\text{Porosity (\%)} = \{1\text{-(Actual density)/(Theoretical density)}\} \times 100.$$

**Experimental Example 3: Adhesive Strength**

The negative electrode single-sided electrode containing the porous layer manufactured in Examples and Comparative Examples was cut into a size of 2 cm in width and 10 cm in length to prepare a sample. The sample was fixed onto a 0.1T glass plate using 3M double-sided tape so that the porous layer was in contact with the double-sided tape. At this time, the sample was positioned so that the short side of the sample coincided with the short side of the slide glass. The other end that was not fixed to the double-sided tape was peeled off at 90 degrees, and the peel strength value was measured according to the ASTM D6862 measurement method using a Texture Analyzer (TA.XT plus100, manufactured by Stable Micro Systems), and is shown in Table 2 below.

**Experimental Example 4: Electrochemical Characteristics**

The negative electrode having the porous layer prepared in Examples and Comparative Examples was vacuum-dried at 80°C for 10 hours, then produced into a coin cell, and the ion conduction resistance was measured.

To produce a coin cell, the negative electrode having a porous layer was punched into a circle with a diameter of 16 mm, placed in a coin cell can so that the porous layer appeared, and then 0.1 ml of electrolyte solution (EC/EMC=3/7 vol%, VC 2%) was injected. A spacer was placed on the porous layer, a lithium metal for a positive electrode punched to a diameter of 15 mm was added, the can was closed, and then a coin cell was produced.

After waiting 2 hours at room temperature and 10 hours at 45 degrees so that the electrolyte solution could be penetrated well, 3 charge/discharge cycles were progressed under the conditions of 0.1C discharge and 0.1C charge, and the first discharge capacity was determined. The 1st coulombic efficiency was calculated according to the following Equation:

1st coulombic efficiency = (1st cycle discharge capacity) / (1st cycle discharge capacity) *100 (%)

The charge capacity maintenance rate and the discharge capacity maintenance rate were measured through C-rate analysis using a coin cell in which 3 charge/discharge cycles were performed. Specifically, 3 charge/discharge cycles were respectively performed in the order of 0.33C, 1C, 2C, 3C, and 0.33C, and then the ratio of the average value of the last charge capacity at 0.33C to the average of the initial charge capacity at 0.33C was calculated to determine the charge capacity maintenance rate. The discharge capacity maintenance rate was also obtained by calculating the ratio of the average value of the last discharge capacity at 0.33C to the average of the initial discharge capacity at 0.33C.

**EP 4 503 168 A1**

[Table 2]

| Category | Example 1 | Example 2 | Example 3 | Example 4 | Comparative Example 1 | Comparative Example 2 |
|---|---|---|---|---|---|---|
| Coating composition for forming porous layer | Preparation Example 1 | Preparation Example 2 | Preparation Example 3 | Preparation Example 4 | Preparation Example 5 | Preparation Example 6 |
| Porous layer thickness ($\mu$m) | 16.7 | 18 | 21.1 | 18.1 | 15.3 | 16.4 |
| Porous layer porosity (%) | 55.5 | 58.7 | 60.4 | 63.1 | 52.4 | 60.2 |
| Bending resistance | 4mm | 4mm | 4mm | 4mm | 16mm | 2mm |
| Peel strength (gf/20mm) | 62.1 | 83.9 | 49.7 | 61.8 | 61.4 | 7.7 |
| Ion conduction resistance (kV/minch) | 0.37 | 0.38 | 0.37 | 0.4 | 0.03 | 0.04 |
| Discharge capacity (mAh/g) | 8111.5 | 8378.3 | 8727 | 9381 | 517.1 | 2174 |
| 1st Coulombic Efficiency (%) | 85.3 | 85.2 | 85.5 | 86.4 | 31.3 | 77.10% |
| Discharge capacity maintenance rate (%) | 86.4 | 98.5 | 88.2 | 86.5 | 64.6 | 39.3 |
| Charge capacity maintenance rate (%) | 87.1 | 80.3 | 89.4 | 76.1 | 57.4 | 32.9 |

As shown in Table 2, it was confirmed that the lithium rechargeable batteries of Examples exhibit a peel strength of 49 gf/20 mm or more between the porous layer and the counter electrode, and thus can realize excellent electrode adhesive strength.

In addition, it was confirmed that the lithium rechargeable batteries of Examples 1 to 4 exhibit a discharge capacity of 8000 mAh/g of more, a coulombic efficiency of 85% or more, an ion conduction resistance of 0.37 kV/minch or more and 0.4 kV/minch or less, a discharge capacity maintenance rate of 85% or more and a charge capacity maintenance rate of 75% or more, and can ensure sufficient battery efficiency and operating performance.

On the other hand, the lithium rechargeable batteries of Comparative Examples 1 and 2 remain at low levels in discharge capacity, coulombic efficiency, discharge capacity maintenance rate and charge capacity maintenance rate. In particular, the lithium ion battery of Comparative Example 2 is expected that interfacial peeling occurs due to insufficient adhesion strength as electrodes expand and contract, which causes a decrease in battery life characteristics.

**Claims**

1.  An electrode for a lithium rechargeable battery comprising:

    an electrode substrate; and
    a porous layer which comprises a binder resin and inorganic fine particles,
    wherein the porous layer is present on the electrode substrate, and
    wherein the binder resin comprises a (co)polymer including a repeating unit derived from a urethane (meth)acrylate-based monomer or oligomer.

2.  The electrode for the lithium rechargeable battery of claim 1, wherein:
    the porous layer has a porosity ranging from 40% to 80%.

3.  The electrode for the lithium rechargeable battery of claim 1, wherein:

the porous layer further has fine pores having a cross-sectional diameter ranging from 20 nm to 2000 nm.

4.  The electrode for the lithium rechargeable battery of claim 1, wherein:
    the binder resin is included in an amount ranging from 1 to 50 parts by weight relative to 100 parts by weight of the inorganic fine particles in the porous layer.

5.  The electrode for the lithium rechargeable battery of claim 1, wherein:
    the urethane (meth)acrylate-based oligomer has a weight average molecular weight ranging from 3,000 to 50,000 g/mol.

6.  The electrode for the lithium rechargeable battery of claim 1, wherein:
    the urethane (meth)acrylate-based monomer or oligomer comprises at least one of polyester (meth)urethane acrylate, polyester urethane di(meth)acrylate, polyether (meth)urethane acrylate, or polyether urethane di(meth) acrylate.

7.  The electrode for the lithium rechargeable battery of claim 1, wherein:
    the (co)polymer further comprises a repeating unit derived from a polyfunctional acrylate.

8.  The electrode for the lithium rechargeable battery of claim 1, wherein:
    the inorganic fine particles comprise at least one of alumina($Al_2O_3$), boehmite(AlOOH), aluminum hydroxide(Al(OH)$_3$), silicon dioxide($SiO_2$), titanium dioxide($TiO_2$), or magnesium hydroxide(Mg(OH)$_2$).

9.  The electrode for the lithium rechargeable battery of claim 1, wherein:
    the inorganic fine particles comprise boehmite containing primary particles having an average particle diameter ranging from 10 nm to 500 nm.

10. The electrode for the lithium rechargeable battery of claim 1, wherein:
    the inorganic fine particles comprise inorganic fine particles surface-modified with at least one of (meth)acrylate, thiol, or an organic silane compound.

11. The electrode for the lithium rechargeable battery of claim 1, wherein:
    the porous layer has a thickness ranging from 0.1 $\mu$m to 30 $\mu$m.

12. The electrode for the lithium rechargeable battery of claim 1, wherein:

    the electrode substrate is a negative electrode substrate, and
    the electrode is a negative electrode.

13. The electrode for the lithium rechargeable battery of claim 1, wherein:
    no cracks occur when the electrode for the lithium rechargeable battery is wound around a cylindrical mandrel with a diameter of 2 mm or more according to the ISO1519:2011 standard method.

14. A lithium rechargeable battery comprising the electrode for the lithium rechargeable battery of claim 1.

15. The lithium rechargeable battery according to claim 14, comprising:

    the electrode for the lithium rechargeable battery; and
    a counter electrode in contact with the porous layer included in the electrode for a lithium rechargeable battery.

【FIG. 1】

<div align="center">

**INTERNATIONAL SEARCH REPORT**

</div>

| International application No. |
|---|
| **PCT/KR2023/012396** |

| A. | CLASSIFICATION OF SUBJECT MATTER |
|---|---|
| | **H01M 4/13**(2010.01)i; **H01M 4/62**(2006.01)i; **H01M 4/139**(2010.01)i; **H01M 4/02**(2006.01)i |

According to International Patent Classification (IPC) or to both national classification and IPC

| B. | FIELDS SEARCHED |
|---|---|

Minimum documentation searched (classification system followed by classification symbols)

H01M 4/13(2010.01); H01M 10/04(2006.01); H01M 10/052(2010.01); H01M 10/0525(2010.01); H01M 10/0564(2010.01); H01M 14/00(2006.01); H01M 2/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 다공성층(porous layer), 무기 미세 입자 (inorganic fine particle), 바인더 수지(binder resin)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-1734328 B1 (LG CHEM, LTD.) 11 May 2017 (2017-05-11)<br>See paragraphs [0062]-[0064] and [0092]-[0102]; and claims 1, 6 and 9-11. | 1-15 |
| Y | KR 10-2019-0006586 A (SAMSUNG SDI CO., LTD. et al.) 18 January 2019 (2019-01-18)<br>See paragraphs [0025], [0042], [0044]-[0045] and [0066]-[0067]; and claims 1, 5, 7 and 12-13. | 1-15 |
| A | KR 10-2012-0031738 A (SAMSUNG ELECTRONICS CO., LTD.) 04 April 2012 (2012-04-04)<br>See entire document. | 1-15 |
| A | KR 10-2013-0133444 A (LG CHEM, LTD.) 09 December 2013 (2013-12-09)<br>See entire document. | 1-15 |
| A | JP 2013-196948 A (OSAKA GAS CO., LTD.) 30 September 2013 (2013-09-30)<br>See entire document. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 November 2023** | **27 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 503 168 A1

<table>
<thead>
<tr><th colspan="3">INTERNATIONAL SEARCH REPORT<br>Information on patent family members</th><th colspan="2">International application No.<br>**PCT/KR2023/012396**</th></tr>
<tr><th colspan="2">Patent document<br>cited in search report</th><th>Publication date<br>(day/month/year)</th><th>Patent family member(s)</th><th>Publication date<br>(day/month/year)</th></tr>
</thead>
<tbody>
<tr><td>KR 10-1734328</td><td>B1</td><td>11 May 2017</td><td>CN 107004808 A</td><td>01 August 2017</td></tr>
<tr><td></td><td></td><td></td><td>CN 107004808 B</td><td>12 November 2019</td></tr>
<tr><td></td><td></td><td></td><td>EP 3190652 A1</td><td>12 July 2017</td></tr>
<tr><td></td><td></td><td></td><td>EP 3190652 A4</td><td>13 September 2017</td></tr>
<tr><td></td><td></td><td></td><td>EP 3190652 B1</td><td>14 August 2019</td></tr>
<tr><td></td><td></td><td></td><td>JP 2018-503933 A</td><td>08 February 2018</td></tr>
<tr><td></td><td></td><td></td><td>JP 6461328 B2</td><td>30 January 2019</td></tr>
<tr><td></td><td></td><td></td><td>KR 10-2016-0069493 A</td><td>16 June 2016</td></tr>
<tr><td></td><td></td><td></td><td>US 10629913 B2</td><td>21 April 2020</td></tr>
<tr><td></td><td></td><td></td><td>US 2017-0309915 A1</td><td>26 October 2017</td></tr>
<tr><td></td><td></td><td></td><td>WO 2016-093589 A1</td><td>16 June 2016</td></tr>
<tr><td>KR 10-2019-0006586</td><td>A</td><td>18 January 2019</td><td>KR 10-2016-0115599 A</td><td>06 October 2016</td></tr>
<tr><td></td><td></td><td></td><td>US 10236490 B2</td><td>19 March 2019</td></tr>
<tr><td></td><td></td><td></td><td>US 2016-0285063 A1</td><td>29 September 2016</td></tr>
<tr><td>KR 10-2012-0031738</td><td>A</td><td>04 April 2012</td><td>KR 10-1669215 B1</td><td>26 October 2016</td></tr>
<tr><td></td><td></td><td></td><td>US 2012-0077092 A1</td><td>29 March 2012</td></tr>
<tr><td></td><td></td><td></td><td>US 9105940 B2</td><td>11 August 2015</td></tr>
<tr><td>KR 10-2013-0133444</td><td>A</td><td>09 December 2013</td><td>None</td><td></td></tr>
<tr><td>JP 2013-196948</td><td>A</td><td>30 September 2013</td><td>None</td><td></td></tr>
</tbody>
</table>

Form PCT/ISA/210 (patent family annex) (July 2022)

19

**REFERENCES CITED IN THE DESCRIPTION**

**Patent documents cited in the description**

- KR 2023012396 W
- KR 1020220105065

- KR 1020230109223